# EUROPÄISCHE PATENTANMELDUNG

(11) **EP 1 717 296 A1**
(43) Veröffentlichungstag der Anmeldung: **02.11.2006**
(21) Anmeldenummer: 06008073.6
(22) Anmeldetag: 19.04.2006
(51) Int. Cl.: C10L 1/14, C10L 10/14, C10L 1/02

(54) **Additive für schwefelarme Mineralöldestillate, umfassend Aromaten, welche eine Hydroxygruppe, eine Methoxygruppe und eine Säurefunktion tragen**

(30) Priorität: 30.04.2005 DE 102005020264
(71) Anmelder: Clariant Produkte (Deutschland) GmbH, 65929 Frankfurt am Main (DE)
(72) Erfinder: Siggelkow, Bettina, Dr., 46145 Oberhausen (DE); Neuhaus, Ulrike, 46147 Oberhausen (DE)
(74) Vertreter: Mikulecky, Klaus

(57) **Zusammenfassung**

Gegenstand der Erfindung ist ein Additiv für Brennstofföle, enthaltend mindestens ein Copolymer aus Ethylen und einem ungesättigten Ester, mindestens eine öllösliche polare Stickstoffverbindung, welche ein Umsetzungsprodukt von Aminen der Formel NR⁶R⁷R⁸, worin R⁶, R⁷ und R⁸ gleich oder verschieden sein können, und wenigstens eine dieser Gruppen für C₈-C₃₆-Alkyl, C₆-C₃₆-Cycloalkyl, C₈-C₃₆-Alkenyl, insbesondere C₁₂-C₂₄-Alkyl, C₁₂-C₂₄-Alkenyl oder Cyclohexyl steht, und die übrigen Gruppen entweder Wasserstoff, C₁-C₃₆-Alkyl, C₂-C₃₆-Alkenyl, Cyclohexyl, oder eine Gruppe der Formeln -(A-O)ₓ-E oder -(CH₂)ₙ-NYZ bedeuten, worin A für eine Ethyl- oder Propylgruppe steht, x eine Zahl von 1 bis 50, E = H, C₁-C₃₀-Alkyl, C₅-C₁₂₋Cycloalkyl oder C₆-C₃₀-Aryl, und n = 2, 3 oder 4 bedeuten, und Y und Z unabhängig voneinander H, C₁-C₃₀-Alkyl oder -(A-O)ₓ bedeuten, mit Verbindungen, die mindestens eine Acylgruppe enthalten, ist, und mindestens eine aromatische Verbindung der Formel 1, 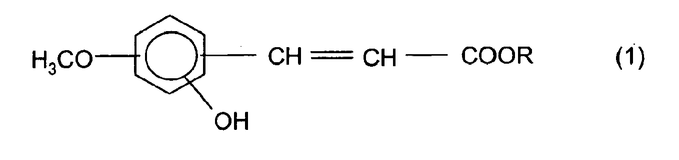 worin R für H oder C₁- bis C₄-Alkyl steht.

## Beschreibung

Die Erfindung betrifft Additive für schwefelarme Mineralöldestillate mit verbesserter Kaltfließfähigkeit und Paraffindispergierung, umfassend ein Additiv basierend auf Hydroxy-Methoxyphenyl-carbonsäure, damit additivierte Brennstofföle und die Verwendung des Additivs.

Im Zuge der abnehmenden Erdölreserven werden bei ständig steigendem Energiebedarf immer problematischere Rohöle gefördert und verarbeitet. Darüber hinaus werden die Anforderungen an die daraus hergestellten Brennstofföle wie Diesel und Heizöl nicht zuletzt durch legislative Vorgaben immer anspruchsvoller. Beispiele dafür sind die Absenkung des Schwefelgehaltes, die Begrenzung des Siedeendes sowie des Aromatengehaltes von Mitteldestillaten, die die Raffinerien zu ständiger Anpassung der Verarbeitungstechnologie zwingen. Dies führt in Mitteldestillaten in vielen Fällen zu einem erhöhten Anteil an Paraffinen speziell im Kettenlängenbereich von C₁₈ bis C₂₄, was wiederum einen negativen Einfluss auf die Kaltfließeigenschaften dieser Brennstofföle hat.

Rohöle und durch Destillation von Rohölen gewonnene Mitteldestillate wie Gasöl, Dieselöl oder Heizöl enthalten je nach Herkunft der Rohöle unterschiedliche Mengen an n-Paraffinen, die bei Erniedrigung der Temperatur als plättchenförmige Kristalle auskristallisieren und teilweise unter Einschluss von Öl agglomerieren. Durch diese Kristallisation und Agglomeration kommt es zu einer Verschlechterung der Fließeigenschaften der Öle bzw. Destillate, wodurch bei Gewinnung, Transport, Lagerung und/oder Einsatz der Mineralöle und Mineralöldestillate Störungen auftreten können. Beim Transport von Mineralölen durch Rohrleitungen kann das Kristallisationsphänomen vor allem im Winter zu Ablagerungen an den Rohrwänden, in Einzelfällen, z.B. bei Stillstand einer Pipeline, sogar zu deren völliger Verstopfung führen. Bei der Lagerung und Weiterverarbeitung der Mineralöle kann es ferner im Winter erforderlich sein, die Mineralöle in beheizten Tanks zu lagern. Bei Mineralöldestillaten kommt es als Folge der Kristallisation gegebenenfalls zu Verstopfungen der Filter in Dieselmotoren und Feuerungsanlagen, wodurch eine sichere Dosierung der Brennstoffe verhindert wird und unter Umständen eine völlige Unterbrechung der Kraftstoff- bzw. Heizmittelzufuhr eintritt.

Neben den klassischen Methoden zur Beseitigung der auskristallisierten Paraffine (thermisch, mechanisch oder mit Lösungsmitteln), die sich lediglich auf die Entfernung der bereits gebildeten Ausfällungen beziehen, wurden in den letzten Jahren chemische Additive (so genannte Fließverbesserer) entwickelt. Diese bewirken durch physikalisches Zusammenwirken mit den ausfallenden Paraffinkristallen, dass deren Form, Größe und Adhäsionseigenschaften modifiziert werden. Die Additive wirken dabei als zusätzliche Kristallkeime und kristallisieren teilweise mit den Paraffinen aus, wodurch eine größere Anzahl kleinerer Paraffinkristalle mit veränderter Kristallform entsteht. Die modifizierten Paraffinkristalle neigen weniger zur Agglomeration, so dass sich die mit diesen Additiven versetzten Öle noch bei Temperaturen pumpen bzw. verarbeiten lassen, die oft mehr als 20°C tiefer liegen als bei nicht additivierten Ölen.

Typische Fließverbesserer für Rohöle und Mitteldestillate sind Co- und Terpolymere des Ethylens mit Carbonsäureestern des Vinylalkohols.

Eine weitere Aufgabe von Fließverbesserern ist die Dispergierung der Paraffinkristalle, d.h. die Verzögerung bzw. Verhinderung der Sedimentation der Paraffinkristalle und damit der Bildung einer paraffinreichen Schicht am Boden von Lagerbehältern.

EP-A-0 061 895 offenbart Kaltfließverbesserer für Mineralöldestillate, welche Ester, Ether oder deren Mischungen enthalten. Die Ester/Ether enthalten zwei lineare gesättigte C₁₀- bis C₃₀-Alkylgruppen und eine Polyoxyalkylengruppe mit 200 bis 5000 g/mol.

EP-0 973 848 und EP-0 973 850 offenbaren Mischungen aus Estern alkoxilierter Alkohole mit mehr als 10 C-Atomen und Fettsäuren mit 10 - 40 C-Atomen in Kombination mit Ethylen-Copolymeren als Fließverbesserer.

EP-A-0 935 645 offenbart Alkylphenol-Aldehydharze als schmierverbessernden Zusatz in schwefelarmen Mitteldestillaten.

EP-A-0857776 und EP-A-1 088 045 offenbaren Verfahren zur Verbesserung der Fliessfähigkeit von paraffinhaltigen Mineralölen und Mineralöldestillaten durch Zugabe von Ethylen-Copolymeren und Alkylphenol-Aldehyd-Harzen sowie gegebenenfalls weiteren, stickstoffhaltigen Paraffindispergatoren.

WO-99/62973 offenbart die Verwendung von Copolymeren aus Dialkylphenylfumarat und einem Comonomer ausgewählt aus Vinylacetat, Styrol, C₃- bis C₃₀-α-Olefinen, Ethylen und Kohlenmonoxide als Kälteadditiv für Öle.

Es bestand daher die Aufgabe, die Fließfähigkeit und insbesondere die Paraffindispergierung in der Kälte bei Mineralölen bzw. Mineralöldestillaten durch den Zusatz geeigneter Kälteadditive zu verbessern.

Überraschend wurde nun gefunden, dass aromatische Verbindungen, welche in Mineralölen und ―destillaten Hydroxyl-, Methoxy- und Carboxylgruppen enthalten, gut zur Paraffindispergierung geeignet sind.

Gegenstand der Erfindung ist somit ein Additiv für Brennstofföle, enthaltend mindestens ein Copolymer aus Ethylen und einem ungesättigten Ester, mindestens eine öllösliche polare Stickstoffverbindung, welche ein Umsetzungsprodukt von Aminen der Formel NR⁶R⁷R⁸, worin R⁶, R⁷ und R⁸ gleich oder verschieden sein können, und wenigstens eine dieser Gruppen für C₈-C₃₆-Alkyl, C₆-C₃₆-Cycloalkyl, C₈₋C₃₆-Alkenyl, insbesondere C₁₂-C₂₄-Alkyl, C₁₂-C₂₄-Alkenyl oder Cyclohexyl steht, und die übrigen Gruppen entweder Wasserstoff, C₁-C₃₆-Alkyl, C₂-C₃₆-Alkenyl, Cyclohexyl, oder eine Gruppe der Formeln -(A-O)ₓ-E oder -(CH₂)ₙ-NYZ bedeuten, worin A für eine Ethyl- oder Propylgruppe steht, x eine Zahl von 1 bis 50, E = H, C₁-C₃₀-Alkyl, C₅-C₁₂-Cycloalkyl oder C₆-C₃₀-Aryl, und n = 2, 3 oder 4 bedeuten, und Y und Z unabhängig voneinander H, C₁-C₃₀-Alkyl oder -(A-O)ₓ bedeuten, mit Verbindungen, die mindestens eine Acylgruppe enthalten, ist, und mindestens eine aromatische Verbindung der Formel 1, 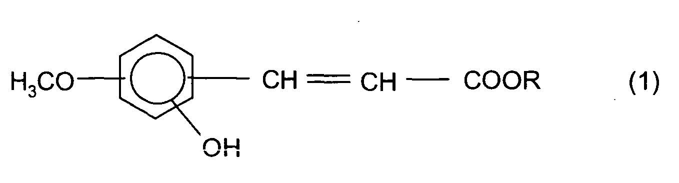 worin R für H oder C₁- bis C₄-Alkyl steht.

Ein weiterer Gegenstand der Erfindung sind Brennstofföle, enthaltend mindestens ein Copolymer aus Ethylen und einem ungesättigten Ester, mindestens eine öllösliche polare Stickstoffverbindung, welche ein Umsetzungsprodukt von Aminen der Formel NR⁶R⁷R⁸, worin R⁶, R⁷ und R⁸ gleich oder verschieden sein können, und wenigstens eine dieser Gruppen für C₈-C₃₆-Alkyl, C₆-C₃₆-Cycloalkyl, C₈-C₃₆-Alkenyl, insbesondere C₁₂-C₂₄-Alkyl, C₁₂-C₂₄-Alkenyl oder Cyclohexyl steht, und die übrigen Gruppen entweder Wasserstoff, C₁-C₃₆-Alkyl, C₂-C₃₆-Alkenyl, Cyclohexyl, oder eine Gruppe der Formeln ―(A-O)ₓ-E oder -(CH₂)ₙ-NYZ bedeuten, worin A für eine Ethyl-oder Propylgruppe steht, x eine Zahl von 1 bis 50, E = H, C₁-C₃₀-Alkyl, C₅-C₁₂₋Cycloalkyl oder C₆-C₃₀-Aryl, und n = 2, 3 oder 4 bedeuten, und Y und Z unabhängig voneinander H, C₁-C₃₀-Alkyl oder ―(A-O)ₓ bedeuten, mit Verbindungen, die mindestens eine Acylgruppe enthalten, ist, und mindestens eine aromatische Verbindung der Formel 1, 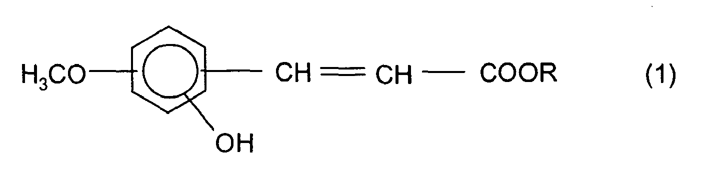 worin R für H oder C₁- bis C₄-Alkyl steht.

Ein weiterer Gegenstand der Erfindung ist die Verwendung der erfindungsgemäßen Additive in Mengen von 5 bis 10.000 ppm als Paraffindispergator in Brennstoffölen, vorzugsweise in Mitteldestillaten.

Ein weiterer Gegenstand der Erfindung ist ein Verfahren zur Verbesserung der Kaltfließeigenschaften von Brennstoffölen, umfassend die Zugabe von 5 bis 10.000 ppm der erfindungsgemäßen Additive zu dem Brennstofföl.

Die oben angegebenen aromatischen Verbindungen der Formel 1 werden im Folgenden als aromatische Additive bezeichnet. Besonders bevorzugt sind 4-Hydroxy-3-Methoxyphenyl-Propionsäure oder 4-Hydroxy-3-methoxyzimtsäure.

Die aromatischen Additive werden Mitteldestillaten, unabhängig von deren Gehalt an Copolymeren aus Ethylen und einem ungesättigten Ester, vorzugsweise in Mengen von 10 bis 1000, insbesondere 20 bis 500 ppm zugesetzt.

Das Additiv für Brennstofföle wird im Folgenden als erfindungsgemäßes Additiv bezeichnet.

Die erfindungsgemäßen Additive enthalten neben dem aromatischen Additiv noch ein oder mehrere Copolymere aus Ethylen und ungesättigten Estern und gegebenenfalls weiteren olefinisch ungesättigten Verbindungen. Als Ethylencopolymere eignen sich insbesondere solche, die neben Ethylen 6 bis 21 Mol-%, insbesondere 10 bis 18 Mol-% ungesättigte Ester enthalten. Vorzugsweise haben diese Copolymere Schmelzviskositäten bei 140°C von 20 bis 10.000 mPas, insbesondere von 30 bis 5.000 mPas, speziell von 50 bis 2.000 mPas.

Die ungesättigten Ester sind vorzugsweise Vinylester, Acrylester, und/oder Methacrylester.

Bei den weiteren olefinisch ungesättigten Verbindungen handelt es sich vorzugsweise um Alkylvinylether und/oder Alkene, wobei diese mit Hydroxylgruppen substituiert sein können.

Es können neben Ethylen ein oder mehrere Comonomere im Copolymer enthalten sein.

Bei den Vinylestern handelt es sich vorzugsweise um solche der Formel 2

CH₂=CH-OCOR¹ (2)

worin R¹ C₁ bis C₃₀-Alkyl, vorzugsweise C₄ bis C₁₆-Alkyl, speziell C₆- bis C₁₂-Alkyl bedeutet. In einer weiteren Ausführungsform können die genannten Alkylgruppen mit einer oder mehreren Hydroxylgruppen substituiert sein.

In einer weiteren bevorzugten Ausführungsform steht R¹ für einen verzweigten Alkylrest oder einen Neoalkylrest mit 7 bis 11 Kohlenstoffatomen, insbesondere mit 8, 9 oder 10 Kohlenstoffatomen. Besonders bevorzugte Vinylester leiten sich von sekundären und insbesondere tertiären Carbonsäuren ab, deren Verzweigung sich in alpha-Position zur Carbonylgruppe befindet. Geeignete Vinylester umfassen Vinylacetat, Vinylpropionat, Vinylbutyrat, Vinylisobutyrat, Vinylhexanoat, Vinylheptanoat, Vinyloctanoat, Pivalinsäurevinylester, 2-Ethylhexansäurevinylester, Vinyllaurat, Vinylstearat sowie Versaticsäureester wie Neononansäurevinylester, Neodecansäurevinylester, Neoundecansäurevinylester.

In einer weiteren bevorzugten Ausführungsform enthalten diese Ethylen-Copolymere Vinylacetat und mindestens einen weiteren Vinylester der Formel 4 worin R¹ für C₄ bis C₃₀-Alkyl, vorzugsweise C₄ bis C₁₆-Alkyl, speziell C₆- bis C₁₂-Alkyl steht.

Bei den (Meth)Acrylestern handelt es sich vorzugsweise um solche der Formel 3

CH₂=CR²-COOR³ (3)

worin R² Wasserstoff oder Methyl und R³ C₁- bis C₃₀-Alkyl, vorzugsweise C₄- bis C₁₆₋Alkyl, speziell C₆- bis C₁₂-Alkyl bedeutet. Geeignete Acrylester umfassen z.B. Methyl(meth)acrylat, Ethyl(meth)acrylat, Propyl(meth)acrylat, n- und isoButyl(meth)acrylat, Hexyl-, Octyl-, 2-Ethylhexyl-, Decyl-, Dodecyl-, Tetradecyl-, Hexadecyl-, Octadecyl(meth)acrylat sowie Mischungen dieser Comonomere. In einer weiteren Ausführungsform können die genannten Alkylgruppen mit einer oder mehreren Hydroxylgruppen substituiert sein. Ein Beispiel für einen solchen Acrylester ist Hydroxyethylmethacrylat.

Bei den Alkylvinylethern handelt es sich vorzugsweise um Verbindungen der Formel 4

CH₂=CH-OR⁴ (4)

worin R⁴ C₁- bis C₃₀-Alkyl, vorzugsweise C₄- bis C₁₆-Alkyl, speziell C₆- bis C₁₂-Alkyl bedeutet. Beispielsweise seien genannt Methylvinylether, Ethylvinylether, isoButylvinylether. In einer weiteren Ausführungsform können die genannten Alkylgruppen mit einer oder mehreren Hydroxylgruppen substituiert sein.

Bei den Alkenen handelt es sich vorzugsweise um einfache ungesättigte Kohlenwasserstoffe mit 3 bis 30 Kohlenstoffatomen, insbesondere 4 bis 16 Kohlenstoffatomen und speziell 5 bis 12 Kohlenstoffatomen. Geeignete Alkene umfassen Propen, Buten, Isobutylen, Penten, Hexen, 4-Methylpenten, Octen, Diisobutylen sowie Norbornen und seine Derivate wie Methylnorbornen und Vinylnorbornen. In einer weiteren Ausführungsform können die genannten Alkylgruppen mit einer oder mehreren Hydroxylgruppen substituiert sein.

Besonders bevorzugte Terpolymerisate enthalten außer Ethylen 0,1 bis 12 Mol-%, insbesondere 0,2 bis 5 Mol-% Neononansäurevinylester bzw. Neodecansäurevinylester und 3,5 bis 20 Mol-%, insbesondere 8 bis 15 Mol-% Vinylacetat, wobei der gesamte Comonomergehalt zwischen 6 und 21 Mol-%, bevorzugt zwischen 12 und 18 Mol-% liegt.

Weitere besonders bevorzugte Copolymere enthalten neben Ethylen und 8 bis 18 Mol-% Vinylestern noch 0,5 bis 15 Mol-% Alkene wie oben beschrieben.

Bevorzugt werden Mischungen aus zwei oder mehr der oben genannten Ethylencopolymere eingesetzt. Besonders bevorzugt unterscheiden sich die den Mischungen zu Grunde liegenden Polymere in mindestens einem Merkmal.

Beispielsweise können sie unterschiedliche Comonomere enthalten, oder unterschiedliche Comonomergehalte, Molekulargewichte und/oder Verzweigungsgrade aufweisen.

Das Mischungsverhältnis zwischen den aromatischen Additiven, den Ethylencopolymeren und den öllöslichen polaren Stickstoffverbindungen kann je nach Anwendungsfall in weiten Grenzen variieren, wobei die Ethylencopolymere und die öllöslichen polaren Stickstoffverbindungen oftmals den größeren Anteil darstellen. Bevorzugt enthalten die erfindungsgemäßen Additive 2 bis 70 Gew.-%, bevorzugt 5 bis 50 Gew.-% des aromatischen Additivs, sowie 30 bis 98 Gew.-%, bevorzugt 50 bis 95 Gew.-% Ethylencopolymere sowie der öllöslichen polaren Stickstoffverbindungen. Beispielhafte Konzentrationen sind 0,1 bis 100, vorzugsweise 1 bis 50, insbesondere 5 bis 50 ppm an aromatischem Additiv, 20 bis 500, vorzugsweise 50 bis 400, insbesondere 75 bis 350 ppm an Ethylencopolymer und 20 bis 500, vorzugsweise 50 bis 400, insbesondere 75 bis 350 ppm an öllöslichen polaren Stickstoffverbindungen.

Bei den geeigneten öllöslichen polaren Stickstoffverbindungen (Bestandteil II) handelt es sich um Umsetzungsprodukte von Fettaminen mit Verbindungen, die eine Acylgruppe enthalten. Bei den Aminen handelt es sich um Verbindungen der Formel NR⁶R⁷R⁸, worin R⁶, R⁷ und R⁸ gleich oder verschieden sein können, und wenigstens eine dieser Gruppen für C₈-C₃₆-Alkyl, C₆-C₃₆-Cycloalkyl, C₈-C₃₆-Alkenyl, insbesondere C₁₂-C₂₄-Alkyl, C₁₂-C₂₄-Alkenyl oder Cyclohexyl steht, und die übrigen Gruppen entweder Wasserstoff, C₁-C₃₆-Alkyl, C₂-C₃₆-Alkenyl, Cyclohexyl, oder eine Gruppe der Formeln ―(A-O)ₓ-E oder -(CH₂)ₙ-NYZ bedeuten, worin A für eine Ethyl-oder Propylgruppe steht, x eine Zahl von 1 bis 50, E = H, C₁-C₃₀-Alkyl, C₅-C₁₂₋Cycloalkyl oder C₆-C₃₀-Aryl, und n = 2, 3 oder 4 bedeuten, und Y und Z unabhängig voneinander H, C₁-C₃₀-Alkyl oder ―(A-O)ₓ bedeuten. Die Alkyl- und Alkenylreste können linear oder verzweigt sein und bis zu zwei Doppelbindungen enthalten. Bevorzugt sind sie linear und weitgehend gesättigt, das heißt sie haben Jodzahlen von weniger als 75 gl₂/g, bevorzugt weniger als 60 gl₂/g und insbesondere zwischen 1 und 10 gl₂/g. Besonders bevorzugt sind sekundäre Fettamine, in denen zwei der Gruppen R⁶, R⁷ und R⁸ für C₈-C₃₆-Alkyl, C₆-C₃₆-Cycloalkyl, C₈-C₃₆-Alkenyl, insbesondere für C₁₂-C₂₄-Alkyl, C₁₂-C₂₄-Alkenyl oder Cyclohexyl stehen. Geeignete Fettamine sind beispielsweise Octylamin, Decylamin, Dodecylamin, Tetradecylamin, Hexadecylamin, Octadecylamin, Eicosylamin, Behenylamin, Didecylamin, Didodecylamin, Ditetradecylamin, Dihexadecylamin, Dioctadecylamin, Dieicosylamin, Dibehenylamin sowie deren Mischungen. Speziell enthalten die Amine Kettenschnitte auf Basis natürlicher Rohstoffe wie z.B. Cocosfettamin, Talgfettamin, hydriertes Talgfettamin, Dicocosfettamin, Ditalgfettamin und Di(hydriertes Talgfettamin). Besonders bevorzugte Aminderivate sind Aminsalze, Imide und/oder Amide wie beispielsweise Amid-Ammoniumsalze sekundärer Fettamine, insbesondere von Dicocosfettamin, Ditalgfettamin und Distearylamin.

Unter Acylgruppe wird hier eine funktionelle Gruppe folgender Formel verstanden:

> C = O

Für die Umsetzung mit Aminen geeignete Carbonylverbindungen sind sowohl niedermolekulare wie auch polymere Verbindungen mit einer oder mehreren Carboxylgruppen. Bei den niedermolekularen Carbonylverbindungen werden solche mit 2, 3 oder 4 Carbonylgruppen bevorzugt. Sie können auch Heteroatome wie Sauerstoff, Schwefel und Stickstoff enthalten. Geeignete Carbonsäuren sind beispielsweise Malein-, Fumar-, Croton-, Itacon-, Bernsteinsäure, C₁-C₄₀₋Alkenylbernsteinsäure, Adipin-, Glutar-, Sebacin-, und Malonsäure sowie Benzoe-, Phthal-, Trimellit- und Pyromellitsäure, Nitrilotriessigsäure, Ethylendiamintetraessigsäure und deren reaktive Derivate wie beispielsweise Ester, Anhydride und Säurehalogenide. Als polymere Carbonylverbindungen haben sich insbesondere Copolymere ethylenisch ungesättigter Säuren wie beispielsweise Acrylsäure, Methacrylsäure, Maleinsäure, Fumarsäure und Itaconsäure erwiesen, besonders bevorzugt sind Copolymere des Maleinsäureanhydrids. Als Comonomere sind solche geeignet, die dem Copolymer Öllöslichkeit verleihen. Unter öllöslich wird hier verstanden, dass sich das Copolymer nach Umsetzung mit dem Fettamin in praxisrelevanten Dosierraten rückstandsfrei im zu additivierenden Mitteldestillat löst. Geeignete Comonomere sind beispielsweise Olefine, Alkylester der Acrylsäure und Methacrylsäure, Alkylvinylester, Alkylvinylether mit 2 bis 75, bevorzugt 4 bis 40 und insbesondere 8 bis 20 Kohlenstoffatomen im Alkylrest. Bei Olefinen ist hier der an die Doppelbindung gebundene Alkylrest equivalent. Die Molekulargewichte der polymeren Carbonylverbindungen liegen bevorzugt zwischen 400 und 20.000, besonders bevorzugt zwischen 500 und 10.000 wie beispielsweise zwischen 1.000 und 5.000.

Besonders bewährt haben sich öllösliche polare Stickstoffverbindungen, die durch Reaktion aliphatischer oder aromatischer Amine, vorzugsweise langkettiger aliphatischer Amine, mit aliphatischen oder aromatischen Mono-, Di-, Tri- oder Tetracarbonsäuren oder deren Anhydriden erhalten werden (vgl. US 4 211 534). Des gleichen sind Amide und Ammoniumsalze von Aminoalkylenpolycarbonsäuren wie Nitrilotriessigsäure oder Ethylendiamintetraessigsäure mit sekundären Aminen als öllöslichen polaren Stickstoffverbindungen geeignet (vgl. EP 0 398 101). Andere öllöslichen polaren Stickstoffverbindungen sind Copolymere des Maleinsäureanhydrids und α,β-ungesättigter Verbindungen, die gegebenenfalls mit primären Monoalkylaminen und/oder aliphatischen Alkoholen umgesetzt werden können (vgl. EP-A-0 154 177, EP 0 777 712), die Umsetzungsprodukte von Alkenylspirobislactonen mit Aminen (vgl. EP-A-0 413 279 B1) und nach EP-A-0 606 055 A2 Umsetzungsprodukte von Terpolymeren auf Basis α,β-ungesättigter Dicarbonsäureanhydride, α,β-ungesättigter Verbindungen und Polyoxyalkylenethern niederer ungesättigter Alkohole.

Das Mischungsverhältnis zwischen den erfindungsgemäßen Additiven und den öllöslichen polaren Stickstoffverbindungen als Bestandteil II kann je nach Anwendungsfall variieren. Bevorzugt enthalten derartige Additivmischungen 5 bis 95 Gew.-%, bevorzugt 10 bis 90 Gew.-% des erfindungsgemäßen Additivs sowie 5 bis 95 Gew.-%, bevorzugt 10 bis 90 Gew.-% öllösliche polare Stickstoffverbindungen.

Neben den aromatischen Additiven, den Ethylencopolymeren und den öllöslichen polaren Stickstoffverbindungen können weitere Bestandteile als Co-Additive in den Brennstoffölen oder im erfindungsgemäßen Additiv enthalten sein. So können in den erfindungsgemäßen Additiven Olefincopolymere als Co-Additiv verwendet werden.

Geeignete Olefincopolymere als Co-Additiv für das erfindungsgemäße Additiv (Bestandteil III) können sich direkt von monoethylenisch ungesättigten Monomeren ableiten oder indirekt durch Hydrierung von Polymeren, die sich von mehrfach ungesättigten Monomeren wie Isopren oder Butadien ableiten, hergestellt werden. Bevorzugte Copolymere enthalten neben Ethylen Struktureinheiten, die sich von α-Olefinen mit 3 bis 24 C-Atomen ableiten und Molekulargewichte von bis zu 120.000 g/mol aufweisen. Bevorzugte α-Olefine sind Propylen, Buten, Isobuten, n-Hexen, Isohexen, n-Octen, Isoocten, n-Decen, Isodecen. Der Comonomergehalt an Olefinen liegt bevorzugt zwischen 15 und 50 Mol-%, besonders bevorzugt zwischen 20 und 35 Mol-% und speziell zwischen 30 und 45 Mol-%. Diese Copolymeren können auch geringe Mengen, z.B. bis zu 10 Mol-% weiterer Comonomere wie z.B. nicht endständige Olefine oder nicht konjugierte Olefine enthalten. Bevorzugt sind Ethylen-Propylen-Copolymere. Die Olefincopolymere können nach bekannten Methoden hergestellt werden, z.B. mittels Ziegler- oder Metallocen-Katalysatoren.

Weitere geeignete Olefincopolymere sind Blockcopolymere, die Blöcke aus olefinisch ungesättigten, aromatischen Monomeren A und Blöcke aus hydrierten Polyolefinen B enthalten. Besonders geeignet sind Blockcopolymere der Struktur (AB)ₙA und (AB)ₘ, wobei n eine Zahl zwischen 1 und 10 und m eine Zahl zwischen 2 und 10 ist.

Das Mischungsverhältnis zwischen dem erfindungsgemäßen Additiv sowie dem Bestandteil III liegt im allgemeinen jeweils zwischen 1:20 und 20:1, bevorzugt jeweils zwischen 1: 10 und 10:1 nach Gewicht.

In dem erfindungsgemäßen Additiv können weiterhin Kammpolymere als Co-Additiv verwendet werden.

Geeignete Kammpolymere als Co-Additiv für das erfindungsgemäße Additiv (Bestandteil IV) können beispielsweise durch die Formel 5 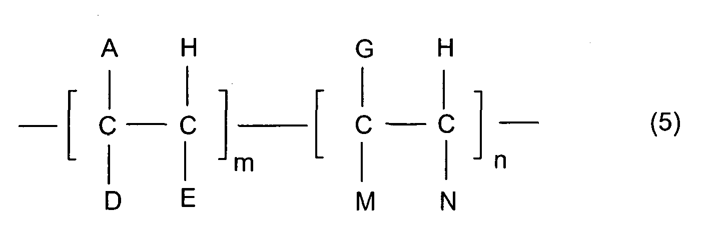 beschrieben werden. Darin bedeuten
- A: R', COOR', OCOR', R"-COOR', OR';
- D: H, CH₃, A oder R";
- E: H, A;
- G: H, R", R"-COOR', einen Arylrest oder einen heterocyclischen Rest;
- M: H, COOR", OCOR", OR", COOH;
- N: H, R", COOR", OCOR", einen Arylrest;
- R': eine Kohlenwasserstoffkette mit 8 bis 50 Kohlenstoffatomen;
- R": eine Kohlenwasserstoffkette mit 1 bis 10 Kohlenstoffatomen;
- m: eine Zahl zwischen 0,4 und 1,0; und
- n: eine Zahl zwischen 0 und 0,6.

In einer bevorzugten Ausführungsform werden in den erfindungsgemäßen Additiven als weitere Bestandteile Alkylphenol-Aldehydharze (Bestandteil V) verwendet. Alkylphenol-Aldehyd-Harze sind prinzipiell bekannt und beispielsweise im Römpp Chemie Lexikon, 9. Auflage, Thieme Verlag 1988-92, Band 4, S. 3351 ff. beschrieben. Erfindungsgemäß geeignet sind insbesondere solche Alkylphenol-Aldehydharze, die sich von Alkylphenolen mit ein oder zwei Alkylresten in ortho-und/oder para-Position zur OH-Gruppe ableiten. Besonders bevorzugt als Ausgangsmaterialien sind Alkylphenole, die am Aromaten mindestens zwei zur Kondensation mit Aldehyden befähigte Wasserstoffatome tragen und insbesondere monoalkylierte Phenole, deren Alkylrest sich in der para-Stellung befindet. Die Alkylreste (darunter werden für den Bestandteil V generell Kohlenwasserstoffreste gemäß nachstehender Definition verstanden) können bei den im erfindungsgemäßen Verfahren einsetzbaren Alkylphenol-Aldehyd-Harzen gleich oder verschieden sein, sie können gesättigt oder ungesättigt sein und besitzen 1 - 200, vorzugsweise 1 - 20, insbesondere 4 - 12 Kohlenstoffatome; bevorzugt handelt es sich um n-, iso- und tert.-Butyl-, n- und iso-Pentyl-, n- und iso-Hexyl-, n- und isoOctyl-, n- und iso-Nonyl-, n- und iso-Decyl-, n- und iso-Dodecyl-, Tetradecyl-, Hexadecyl-, Octadecyl-, Tripropenyl-, Tetrapropenyl-, Poly(propenyl)- und Poly(isobutenyl)reste.

Geeignete Aldehyde für die Alkylphenol-Aldehydharze sind solche mit 1 bis 12 Kohlenstoffatomen und vorzugsweise solche mit 1 bis 4 Kohlenstoffatomen wie beispielsweise Formaldehyd, Acetaldehyd, Propionaldehyd, Butyraldehyd, 2-Ethylhexanal, Benzaldehyd, Glyoxalsäure sowie deren reaktive Equivalente wie Paraformaldehyd und Trioxan. Besonders bevorzugt ist Formaldehyd in Form von Paraformaldehyd und insbesondere Formalin.

Molekulargewichte im Rahmen der vorliegenden Patentanmeldung werden stets mittels Gelpermeationschromatographie (GPC) gegen Polystyrolstandards in THF gemessen.

Das Molekulargewicht der Alkylphenol-Aldehyd-Harze beträgt 400 - 20.000, bevorzugt 400 - 5000 g/mol. Voraussetzung ist hierbei, dass die Alkylphenol-Aldehydharze zumindest in anwendungsrelevanten Konzentrationen von 0,001 bis 1 Gew.-% öllöslich sind.

In einer bevorzugten Ausführungsform der Erfindung handelt es sich dabei um Alkylphenol-Formaldehydharze, die Oligo- oder Polymere mit einer repetitiven Struktureinheit der Formel 3 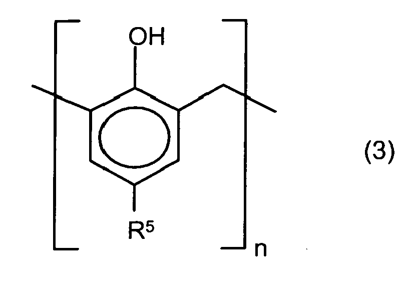 worin R⁵ für C₁-C₂₀₀-Alkyl oder -Alkenyl und n für eine Zahl von 2 bis 100 steht, enthalten. Bevorzugt steht R⁵ für C₄-C₂₀-Alkyl oder ―Alkenyl und insbesondere für C₆-C₁₆-Alkyl oder ―Alkenyl. Bevorzugt steht n für eine Zahl von 2 bis 50 und speziell für eine Zahl von 3 bis 25 wie beispielsweise eine Zahl von 5 bis 15.

Für den Einsatz in Mitteldestillaten wie Diesel und Heizöl besonders bevorzugt sind Alkylphenol-Aldehydharze mit C₂-C₄₀-Alkylresten des Alkylphenols, bevorzugt mit C₄₋C₂₀-Alkylresten wie beispielsweise C₆-C₁₂-Alkylresten. Die Alkylreste können linear oder verzweigt sein, bevorzugt sind sie linear. Besonders geeignete Alkylphenol-Aldehydharze leiten sich von linearen Alkylresten mit 8 und 9 C-Atomen ab. Das mittels GPC bestimmte mittlere Molekulargewicht liegt bevorzugt zwischen 700 und 20.000, insbesondere zwischen 800 und 10.000 wie beispielsweise zwischen 1.000 und 2.500 g/Mol.

Diese Alkylphenol-Aldehydharze sind nach bekannten Verfahren zugänglich, z.B. durch Kondensation der entsprechenden Alkylphenole mit Formaldehyd, d.h. mit 0,5 bis 1,5 Mol, bevorzugt 0,8 bis 1,2 Mol Formaldehyd pro Mol Alkylphenol. Die Kondensation kann lösemittelfrei erfolgen, bevorzugt erfolgt sie jedoch in Gegenwart eines nicht oder nur teilweise wassermischbaren inerten organischen Lösemittels wie Mineralöle, Alkohole, Ether und ähnliches. Besonders bevorzugt sind Lösemittel, die mit Wasser Azeotrope bilden können. Als derartige Lösemittel werden insbesondere Aromaten wie Toluol, Xylol Diethylbenzol und höher siedende kommerzielle Lösemittelgemische wie ^{®}Shellsol AB, und Solvent Naphtha eingesetzt. Die Kondensation erfolgt bevorzugt zwischen 70 und 200°C wie beispielsweise zwischen 90 und 160°C. Sie wird üblicherweise durch 0,05 bis 5 Gew.-% Basen oder Säuren katalysiert. So führt beispielsweise die durch Amine, bevorzugt tertiäre Amine wie beispielsweise Triethylamin katalysierte Kondensation mit nachfolgender Neutralisation mittels organischer Sulfonsäure zu den geeigneten Produkten. Bevorzugt wird die Katalyse durch organische Sulfonsäuren, die nach Abschluss der Kondensation mit Aminen zu den öllöslichen Sulfonsäure-Ammoniumsalzen umgesetzt werden.

Das Mischungsverhältnis der Alkylphenol-Aldehydharze als Co-Additiv zu dem erfindungsgemäßen Additiv liegt im Allgemeinen zwischen 20:1 und 1:20, vorzugsweise zwischen 1:10 und 10:1.

In dem erfindungsgemäßen Additiv können weiterhin Polyoxyalkylenverbindungen als Co-Additive verwendet werden.

Geeignete Polyoxyalkylenverbindungen als Co-Additiv für das erfindungsgemäße Additiv (Bestandteil VI) sind beispielsweise Ester, Ether und Ether/Ester, die mindestens einen Alkylrest mit 12 bis 30 C-Atomen tragen. Wenn die Alkylgruppen von einer Säure stammen, stammt der Rest von einem mehrwertigen Alkohol; kommen die Alkylreste von einem Fettalkohol, so stammt der Rest der Verbindung von einer Polysäure.

Geeignete Polyole sind Polyethylenglykole, Polypropylenglykole, Polybutylenglykole und deren Mischpolymerisate mit einem Molekulargewicht von ca. 100 bis ca. 5000, vorzugsweise 200 bis 2000 g/mol. Weiterhin geeignet sind Alkoxylate von Polyolen, wie beispielsweise von Glycerin, Trimethylolpropan, Pentaerythrit, Neopentylglykol, sowie die daraus durch Kondensation zugänglichen Oligomere mit 2 bis 10 Monomereinheiten, wie z.B. Polyglycerin. Bevorzugte Alkoxylate sind solche mit 1 bis 100, insbesondere 5 bis 50 mol Ethylenoxid, Propylenoxid und/oder Butylenoxid pro mol Polyol. Ester sind besonders bevorzugt.

Fettsäuren mit 12 bis 26 C-Atomen sind zur Umsetzung mit den Polyolen zur Bildung der Esteradditive bevorzugt, wobei besonders bevorzugt C₁₈- bis C₂₄-Fettsäuren verwendet werden, speziell Stearin- und Behensäure. Die Ester können auch durch Veresterung von polyoxyalkylierten Alkoholen hergestellt werden. Bevorzugt sind vollständig veresterte polyoxyalkylierte Poylole mit Molekulargewichten von 150 bis 2000, bevorzugt 200 bis 600. Besonders geeignet sind PEG-600-Dibehenat und Glycerin-Ethylenglykol-Tribehenat.

Das Mischungsverhältnis zwischen dem erfindungsgemäßen Additiv, sowie dem weiteren Bestandteil VI liegt im allgemeinen zwischen 1:10 und 10:1, bevorzugt jeweils zwischen 1 : 5 und 5:1.

Das erfindungsgemäße Additiv kann allein oder in Mischung mit einem oder mehreren der Bestandteile II, III, IV, V oder VI zur Anwendung kommen.

Die erfindungsgemäßen Additive können allein oder auch zusammen mit anderen Additiven verwendet werden, z.B. mit anderen Stockpunkterniedrigern oder Entwachsungshilfsmitteln, mit Antioxidantien, Fließverbesserern, Cetanzahlverbesserern, Dehazern, Demulgatoren, Detergenzien, Lubricity-Additiven, Dispergatoren, Entschäumern, Farbstoffen, Korrosionsinhibitoren, Schlamminhibitoren, Odorantien und/oder Zusätzen zur Erniedrigung des Cloud-Points. Die anderen Additive können direkt in die Brennstoffölmischung zugegeben werden oder durch Mischung verschiedener Brennstoffölkomponenten, welche bereits einzeln mit einem oder mehreren der genannten Additive additiviert wurden, in die Mischung eingebracht werden.

Die erfindungsgemäßen Additive sind geeignet, die Kaltfließeigenschaften von Brennstoffölen tierischen, pflanzlichen oder mineralischen Ursprungs zu verbessern. Darüber hinaus dispergieren sie in Mitteldestillaten die unterhalb des Cloud Points ausfallenden Paraffine. Insbesondere sind sie in problematischen Ölen mit niedrigem Aromatengehalt von weniger als 25 Gew.-%, insbesondere weniger als 22 Gew.-% wie beispielsweise weniger als 20 Gew.-% Aromaten und damit geringer Löslichkeit für n-Paraffine den Additiven des Standes der Technik überlegen. Als Mitteldestillat bezeichnet man insbesondere solche Mineralöle, die durch Destillation von Rohöl gewonnen werden und im Bereich von 120 bis 450°C sieden, beispielsweise Kerosin, Jet-Fuel, Diesel und Heizöl. Unter aromatischen Verbindungen wird die Summe aus mono-, di- und polyzyklischen aromatischen Verbindungen verstanden, wie sie mittels HPLC gemäß DIN EN 12916 (Ausgabe 2001) bestimmbar ist. Besonders vorteilhaft sind die erfindungsgemäßen Additive in solchen Mitteldestillaten, die weniger als 350 ppm Schwefel, besonders bevorzugt weniger als 100 ppm Schwefel insbesondere weniger als 50 ppm Schwefel und in speziellen Fällen weniger als 10 ppm Schwefel enthalten. Es handelt sich dabei im Allgemeinen um solche Mitteldestillate, die einer hydrierenden Raffination unterworfen wurden, und die daher nur geringe Anteile an polyaromatischen und polaren Verbindungen enthalten. Vorzugsweise handelt es sich um solche Mitteldestillate, die 90 %-Destillationspunkte unter 360°C, insbesondere 350°C und in Spezialfällen unter 340°C aufweisen.

Im Zuge abnehmender Welterdölreserven und der Diskussion um die Umwelt beeinträchtigenden Konsequenzen des Verbrauchs fossiler und mineralischer Brennstoffe steigt das Interesse an alternativen, auf nachwachsenden Rohstoffen basierenden Energiequellen. Dazu gehören insbesondere native Öle und Fette pflanzlichen oder tierischen Ursprungs. Dies sind in der Regel Triglyceride von Fettsäuren mit 10 bis 24 C-Atomen, die einen den herkömmlichen Brennstoffen vergleichbaren Heizwert haben, aber gleichzeitig als biologisch abbaubar und umweltverträglich eingestuft werden.

Aus tierischem oder pflanzlichem Material erhaltene Öle sind hauptsächlich Stoffwechselprodukte, die Triglyceride von Monocarbonsäuren umfassen, z.B. Säuren mit 10 bis 25 Kohlenstoffatomen, und der Formel 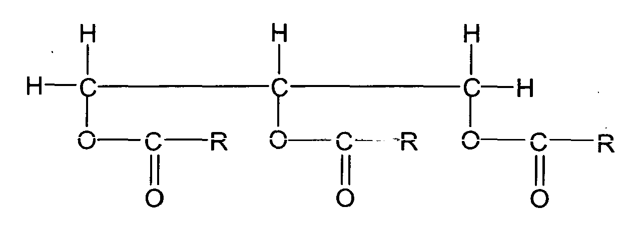 entsprechen, in der R ein aliphatischer Rest mit 10 bis 25 Kohlenstoffatomen ist, der gesättigt oder ungesättigt sein kann.

Im Allgemeinen enthalten solche Öle Glyceride von einer Reihe von Säuren, deren Anzahl und Sorte mit der Quelle des Öls variiert, und sie können zusätzlich Phosphorglyceride enthalten. Solche Öle können nach im Stand der Technik bekannten Verfahren erhalten werden.

Auf Grund der teilweise unbefriedigenden physikalischen Eigenschaften der Triglyceride ist die Technik dazu übergegangen, die natürlich vorkommenden Triglyceride in Fettsäureester niederer Alkohole wie Methanol oder Ethanol zu überführen. Zum Stand der Technik gehören auch Mischungen aus Mitteldestillaten mit Ölen pflanzlicher oder tierischer Herkunft (im Folgenden auch "Biobrennstofföle" genannt).

In einer bevorzugten Ausführungsform handelt es sich bei dem Biobrennstofföl, das häufig auch als "Biodiesel" oder "Biokraftstoff" bezeichnet wird, um Fettsäurealkylester aus Fettsäuren mit 12 bis 24 C-Atomen und Alkoholen mit 1 bis 4 C-Atomen. Gewöhnlich enthält ein größerer Teil der Fettsäuren ein, zwei oder drei Doppelbindungen. Besonders bevorzugt handelt es sich z.B. um Rapsölsäuremethylester und speziell um Mischungen, die Raps-, Sonnenblumen-, Palm-, Altfett- und/oder Sojaölfettsäuremethylester enthalten.

Beispiele für Öle, die sich von tierischem oder pflanzlichem Material ableiten, und die in den erfindungsgemäßen Brennstoffölen verwendet werden können, sind Rapsöl, Korianderöl, Sojaöl, Baumwollsamenöl, Sonnenblumenöl, Ricinusöl, Olivenöl, Erdnussöl, Maisöl, Mandelöl, Palmkernöl, Kokosnussöl, Senfsamenöl, Rindertalg, Knochenöl und Fischöle. Weitere Beispiele schließen Öle ein, die sich von Weizen, Jute, Sesam, Scheabaumnuß, Arachisöl und Leinöl ableiten und können aus diesen nach im Stand der Technik bekannten Verfahren abgeleitet werden. Außerdem können Öle verwendet werden, welche aus gebrauchten Altölen, wie Frittieröl gewonnen wurden. Rapsöl, das eine Mischung von mit Glycerin partiell veresterten Fettsäuren ist, ist bevorzugt, da es in großen Mengen erhältlich ist und in einfacher Weise durch Auspressen von Rapssamen erhältlich ist. Des Weiteren sind die ebenfalls weit verbreiteten Öle von Sonnenblumen und Soja sowie deren Mischungen mit Rapsöl bevorzugt.

Als niedrigere Alkylester von Fettsäuren kommen die folgenden in Betracht, beispielsweise als handelsübliche Mischungen: Die Ethyl-, Propyl-, Butyl- und insbesondere Methylester von Fettsäuren mit 12 bis 22 Kohlenstoffatomen, beispielsweise von Laurinsäure, Myristinsäure, Palmitinsäure, Palmitolsäure, Stearinsäure, Ölsäure, Elaidinsäure, Petroselinsäure, Ricinolsäure, Elaeostearinsäure, Linolsäure, Linolensäure, Eicosansäure, Gadoleinsäure, Docosansäure oder Erucasäure, die bevorzugt eine Iodzahl von 50 bis 150, insbesondere 90 bis 125 haben. Mischungen mit besonders vorteilhaften Eigenschaften sind solche, die hauptsächlich, d.h. zu mindestens 50 Gew.-%, Methylester von Fettsäuren mit 16 bis 22 Kohlenstoffatomen und 1, 2 oder 3 Doppelbindungen enthalten. Die bevorzugten niedrigeren Alkylester von Fettsäuren sind die Methylester von Ölsäure, Linolsäure, Linolensäure und Erucasäure.

Handelsübliche Mischungen der genannten Art werden beispielsweise durch Spaltung und Veresterung von tierischen und pflanzlichen Fetten und Ölen durch ihre Umesterung mit niedrigeren aliphatischen Alkoholen erhalten. Zur Herstellung von niedrigeren Alkylestern von Fettsäuren ist es vorteilhaft, von Fetten und Ölen mit hoher Iodzahl auszugehen, wie beispielsweise Sonnenblumenöl, Rapsöl, Korianderöl, Castoröl (Ricinusöl), Sojaöl, Baumwollsamenöl, Erdnussöl oder Rindertalg. Niedrigere Alkylester von Fettsäuren auf Basis einer neuen Rapsölsorte, deren Fettsäurekomponente zu mehr als 80 Gew.-% von ungesättigten Fettsäuren mit 18 Kohlenstoffatomen abgeleitet ist, sind bevorzugt.

Werden Mischungen aus Mitteldestillat mineralischer Herkunft (A) und Biobrennstoffölen (B) verwendet, kann das Mischungsverhältnis A : B der Bestandteile beliebig variieren. Es liegt vorzugsweise zwischen A:B = 99,9:0,1 und 0,1:99,9, insbesondere 99:1 bis 1:99, speziell 95:5 bis 5:95, beispielhaft 85:15 bis 15:85 oder 80:20 bis 20:80.

Weiterhin können Mischungen aus synthetischen Treibstoffen, wie sie z.B. aus dem Fischer-Tropsch Verfahren zugänglich sind, und einem Mitteldestillat mineralischer Herkunft A und/oder einem Biobrennstofföl B als Brennstoffölzusammensetzung verwendet werden.

### Beispiele

**Tabelle 1: Charakterisierung der Testöle:**

| Als Testöle wurden aktuelle Öle aus europäischen Raffinerien herangezogen. Die Bestimmung des CFPP-Werts erfolgt gemäß EN 116 und die Bestimmung des Cloud Points gemäß ISO 3015. Die Bestimmung der aromatischen Kohlenwasserstoffgruppen erfolgt gemäß DIN EN 12916 (Ausgabe November 2001) | | | | | | | |
|---|---|---|---|---|---|---|---|
| | | | Testöl 1 | Testöl 2 | Testöl 3 | Testöl 4 | Testöl 5 |
| Destillation | | | | | | | |
| | IBP | [°C] | 166,3°C | 173,8°C | 240,7 | 173,8 | 166,6 |
| | 90% - 20% Schnitt | [°C] | 147°C | 117°C | 64,4345,7 | 116,6 | 102,5 |
| | FBP | [°C] | 377,9°C | 345,7°C | | 352,6 | 359,4 |
| Cloud Point | | [°C] | -8,0 | -6,7 | -8,2 | -6,9 | -3,9 |
| CFPP | | [°C] | -11,0 | -8,0 | -11 | -9 | -7 |
| Schwefel | | [ppm] | 308 | 210 | 1450 | 320 | 2,7 |
| Dichte @15°C | | [g/cm³] | 0,826 | 0,831 | 0,841 | 0,827 | 0,845 |
| Aromatengehalt | | [Gew.-%] | 18,73 | 27,50 | 24,16 | 27,96 | 26,63 |
| davon | mono | [Gew.-%] | 14,31 | 22,22 | 15,76 | 22,58 | 23,89 |
| | di | [Gew.-%] | 3,93 | 4,83 | 7,93 | 4,91 | 2,54 |
| | poly | [Gew.-%] | 0,49 | 0,46 | 0,47 | 0,48 | 0,19 |

### Folgende Additive wurden eingesetzt:

### Charakterisierung der als Fliessverbesserer eingesetzten Ethylen-Copolymere

Bei den eingesetzten Ethylen-Copolymeren handelt es sich um kommerzielle Produkte mit den in Tabelle 2 angegebenen Eigenschaften. Die Produkte wurden als 65 %ige bzw. 50 %ige Einstellungen in Kerosin eingesetzt.

Die Bestimmung der Viskosität erfolgte gemäß ISO 3219/B mit einem Rotationsviskosimeter (Haake RV20) mit Platte-Kegel-Messsystem bei 140°C.

**Tabelle 2: Charakterisierung der eingesetzten Ethylen-Copolymere**

| Beispiel | Comonomer(e) | V₁₄₀ |
|---|---|---|
| A1 | 13,6 Mol-% Vinylacetat | 130 mPas |
| A2 | 12,5 Mol-% Vinylacetat und 1,2 Mol-% Neodecansäurevinylester | 150 mPas |
| A3 | 9,8 Mol-% Vinylacetat und 0,6 Mol-% Neodecansäurevinylester | 170 mPas |

### Charakterisierung der eingesetzten weiteren Additive (Bestandteil II):

B1 ) Polare polymere Stickstoffverbindung bestehend aus einem Kammpolymer hergestellt aus 1,3 mol% 1-Tetradecen, 1,3 mol% Hexadecen, 2,6 mol% Maleinsäureanhydrid und 0,2 Mol% Allylmethylpolyglykolether. Das resultierende Polymer hat einen K-Wert von 15 und wird umgesetzt mit je 2,6 mol% Distearylamin und Dicocosfettamin zum Amid-Ammoniumsalz. Der titrierbare Basenstickstoffgehalt der 50%igen Polymerlösung beträgt 0,69%.

### Charakterisierung der aromatischen Additive

1) 4-Hydroxy-3-Methoxyphenyl-Propionsäure
2) 4-Hydroxy-3-methoxyzimtsäure
3) 3-Hydroxy-4-methoxy-benzaldehyd (Vergleich)

### Wirksamkeit der Additive als Kaltfließverbesserer

Zur Beurteilung des Effekts der erfindungsgemäßen Additive auf die Kaltfließeigenschaften von Mitteldestillaten wurden die erfindungsgemäßen Additive in Mitteldestillaten wie folgt im Kurzsedimenttest geprüft:

150 ml der mit den in der Tabelle angegebenen Additivkomponenten versetzten Mitteldestillate wurden in 200 ml-Messzylindern in einem Kälteschrank mit -2°C/Stunde auf -13°C abgekühlt und 16 Stunden bei dieser Temperatur gelagert. Anschließend werden visuell Volumen und Aussehen sowohl der sedimentierten Paraffinphase wie auch der darüber stehenden Ölphase bestimmt und beurteilt. Eine geringe Sedimentmenge und eine trübe Ölphase zeigen eine gute Paraffindispergierung.

Zusätzlich werden die unteren 20 Vol.-% isoliert und der Cloud Point gemäß ISP 3015 bestimmt. Eine nur geringe Abweichung des Cloud Points der unteren Phase (CP_{KS}) vom Blindwert des Öls zeigt eine gute Paraffindispergierung.

Die angegebenen aromatischen Additive werden in einer Menge von 50 - 150 ppm verwendet. Die Verwendung eines Dispergators erfolgt in der Regel in der Gegenwart eines Kaltfließverbesserers. Neben den erfindungsgemäßen Additiven wurden daher noch entsprechende Kaltfließverbesserer eingesetzt.

### Ergebnisse in Testöl 1

Die CFPP-Wirksamkeit und Dispergierwirkung der erfindungsgemäßen Additive (Bestandteil I) wurden in einer Zusammensetzung von (nach Gewichtsteilen) 50 ppm des aromatischen Additivs mit 100 ppm B1 und 400 ppm A2 bestimmt.

| Beispiel | Aromatisches Additiv | CFPP [°C] | CP_{KS} [°C] | Optische Beurteilung |
|---|---|---|---|---|
| 1 | 1 | -26 | -7,6 | Homogen trüb, kein Sediment |
| 2 | 2 | -27 | -7,9 | Homogen trüb, kein Sediment |
| 3(V) | 3 (V) | -22 | -5,2 | 5 ml Sediment, homogen trüb |

### Ergebnisse in Testöl 2

Die CFPP-Wirksamkeit und Dispergierwirkung der erfindungsgemäßen Additive (Bestandteil I) wurden in einer Zusammensetzung von (nach Gewichtsteilen) 100 ppm des aromatischen Additivs mit 150 ppm B1 und 300 ppm A2 bestimmt.

| Beispiel | Aromatisches Additiv | CFPP [°C] | CP_{KS} [°C] | Optische Beurteilung |
|---|---|---|---|---|
| 4 | 1 | -27 | -6,1 | Homogen trüb, kein Sediment |
| 5 | 2 | -28 | -6,5 | Homogen trüb, kein Sediment |
| 6 (V) | 3 (V) | -21 | -4,7 | 8 ml Sediment |

### Ergebnisse in Testöl 3

Die CFPP-Wirksamkeit und Dispergierwirkung der erfindungsgemäßen Additive (Bestandteil I) wurden in einer Zusammensetzung von (nach Gewichtsteilen) 50 ppm des aromatischen Additivs mit 100 ppm B1 und 200 ppm A3 bestimmt.

| Beispiel | Aromatisches Additiv | CFPP [°C] | CP_{KS} [°C] | Optische Beurteilung |
|---|---|---|---|---|
| 7 | 1 | -23 | -7,9 | 1 ml Sediment, homogen trübe |
| 8 | 2 | -24 | -8,1 | Homogen trüb, kein Sediment |
| 9 (V) | 3 (V) | -19 | -6,8 | 12 ml Sediment, homogen trübe |

### Ergebnisse in Testöl 4

Die CFPP-Wirksamkeit und Dispergierwirkung der erfindungsgemäßen Additive (Bestandteil I) wurden in einer Zusammensetzung von (nach Gewichtsteilen) 50 ppm des aromatischen Additivs mit 200 ppm B1 und 300 ppm A3 bestimmt.

| Beispiel | Aromatisches Additiv | CFPP [°C] | CP_{KS} [°C] | Optische Beurteilung |
|---|---|---|---|---|
| 10 | 1 | -29 | -3,2 | Homogen trübe, kein Sediment |
| 11 | 2 | -28 | -3,5 | Homogen trübe, kein Sediment |
| 12 (V) | 3 (V) | -23 | -1,2 | 11 ml Sediment, homogen trübe |

### Ergebnisse in Testöl 5

Die CFPP-Wirksamkeit und Dispergierwirkung der erfindungsgemäßen Additive (Bestandteil I) wurden in einer Zusammensetzung von (nach Gewichtsteilen) 100 ppm des aromatischen Additivs mit 200 ppm B1 und 300 ppm A1 bestimmt.

| Beispiel | Aromatisches Additiv | CFPP [°C] | CP_{KS} [°C] | Optische Beurteilung |
|---|---|---|---|---|
| 13 | 1 | -25 | -7,5 | Homogen trübe, kein Sediment |
| 14 | 2 | -27 | -7,1 | Homogen trübe, kein Sediment |
| 15 (V) | 3 (V) | -22 | -4,9 | 15 ml Sediment, homogen trübe |

## Patentansprüche

1. Additiv für Brennstofföle, enthaltend mindestens ein Copolymer aus Ethylen und einem ungesättigten Ester, mindestens eine öllösliche polare Stickstoffverbindung, welche ein Umsetzungsprodukt von Aminen der Formel NR⁶R⁷R⁸, worin R⁶, R⁷ und R⁸ gleich oder verschieden sein können, und wenigstens eine dieser Gruppen für C₈-C₃₆-Alkyl, C₆-C₃₆-Cycloalkyl, C₈-C₃₆-Alkenyl, insbesondere C₁₂-C₂₄-Alkyl, C₁₂-C₂₄-Alkenyl oder Cyclohexyl steht, und die übrigen Gruppen entweder Wasserstoff, C₁-C₃₆-Alkyl, C₂-C₃₆-Alkenyl, Cyclohexyl, oder eine Gruppe der Formeln -(A-O)ₓ-E oder -(CH₂)ₙ-NYZ bedeuten, worin A für eine Ethyl-oder Propylgruppe steht, x eine Zahl von 1 bis 50, E = H, C₁-C₃₀-Alkyl, C₅-C₁₂₋Cycloalkyl oder C₆-C₃₀-Aryl, und n = 2, 3 oder 4 bedeuten, und Y und Z unabhängig voneinander H, C₁-C₃₀-Alkyl oder -(A-O)ₓ bedeuten, mit Verbindungen, die mindestens eine Acylgruppe enthalten, ist, und mindestens eine aromatische Verbindung der Formel 1, 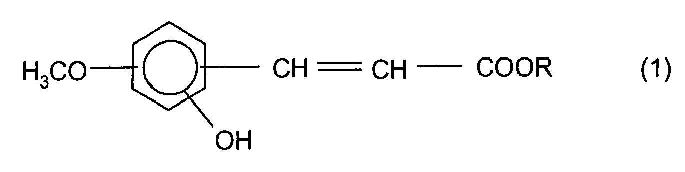 worin R für H oder C₁- bis C₄-Alkyl steht.

2. Additiv nach Anspruch 1, worin die aromatische Verbindung der Formel 1 4-Hydroxy-3-Methoxyphenyl-Propionsäure oder 4-Hydroxy-3-methoxyzimtsäure ist.

3. Additiv nach Anspruch 1 und/oder 2, worin das Ethylencopolymer neben Ethylen 6 bis 21 Mol-% ungesättigte Ester enthält.

4. Additiv nach einem oder mehreren der Ansprüche 1 bis 3, worin die ungesättigten Ester Vinylester, Acrylester und/oder Methacrylester sind.

5. Additiv nach einem oder mehreren der Ansprüche 1 bis 4, worin neben Ethylen zwei oder mehr Comonomere im Copolymer enthalten sind.

6. Additiv nach einem oder mehreren der Ansprüche 1 bis 5, worin die Ethylencopolymere als Comonomere Alkene mit 3 bis 30 Kohlenstoffatomen enthalten.

7. Additiv nach einem oder mehreren der Ansprüche 1 bis 6, welches Alkylphenol-Aldehydharze, die sich von Alkylphenolen mit ein oder zwei Alkylresten mit 1 -200 Kohlenstoffatomen in ortho- und/oder para-Position zur OH-Gruppe und Aldehyden mit 1 bis 12 Kohlenstoffatomen ableiten, enthält.

8. Additiv nach Anspruch 7, enthaltend Alkylphenol-Formaldehydharze mit einer repetitiven Einheit der Formel 3 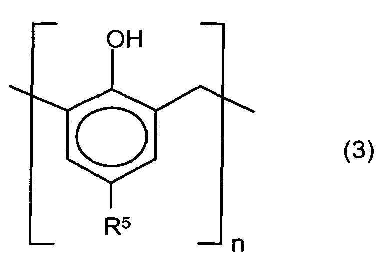 worin R⁵ für C₁-C₂₀₀-Alkyl oder -Alkenyl und n für eine Zahl von 2 bis 100 steht, im Gewichtsverhältnis von 1:20 bis 20:1 bezogen auf das Gewicht des erfindungsgemäßen Additivs aus Copolymer aus Ethylen und einem ungesättigten Ester und der aromatischen Verbindung der Formel 1.

9. Additiv nach einem oder mehreren der Ansprüche 1 bis 8, welches Kammpolymere der Formel 5 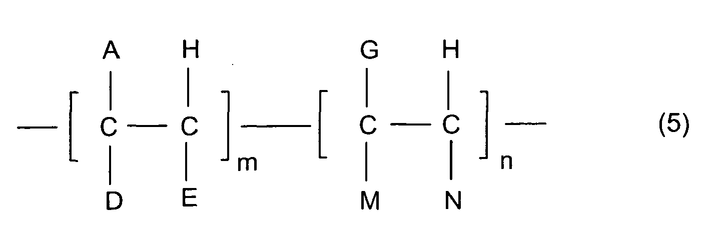 enthält, worin
A R', COOR', OCOR', R"-COOR', OR';
D H, CH₃, A oder R";
E H, A;
G H, R", R"-COOR', einen Arylrest oder einen heterocyclischen Rest;
M H, COOR", OCOR", OR", COOH;
N H, R", COOR", OCOR", einen Arylrest;
R' eine Kohlenwasserstoffkette mit 8 bis 50 Kohlenstoffatomen;
R" eine Kohlenwasserstoffkette mit 1 bis 10 Kohlenstoffatomen;
m eine Zahl zwischen 0,4 und 1,0; und
n eine Zahl zwischen 0 und 0,6
bedeuten.

10. Additiv nach einem oder mehreren der Ansprüche 1 bis 9, welches Polyoxyalkylenverbindungen enthält, die Ester, Ether und Ether/Ester mit mindestens einem Alkylrest mit 12 bis 30 C-Atomen sind.

11. Brennstofföl, enthaltend ein Öl tierischen, pflanzlichen und/oder mineralischen Ursprungs, mindestens ein Copolymer aus Ethylen und einem ungesättigten Ester, mindestens eine öllösliche polare Stickstoffverbindung, welche ein Umsetzungsprodukt von Aminen der Formel NR⁶R⁷R⁸, worin R⁶, R⁷ und R⁸ gleich oder verschieden sein können, und wenigstens eine dieser Gruppen für C₈-C₃₆-Alkyl, C₆-C₃₆-Cycloalkyl, C₈-C₃₆-Alkenyl, insbesondere C₁₂-C₂₄-Alkyl, C₁₂-C₂₄-Alkenyl oder Cyclohexyl steht, und die übrigen Gruppen entweder Wasserstoff, C₁-C₃₆-Alkyl, C₂₋C₃₆-Alkenyl, Cyclohexyl, oder eine Gruppe der Formeln ―(A-O)ₓ-E oder -(CH₂)ₙ-NYZ bedeuten, worin A für eine Ethyl- oder Propylgruppe steht, x eine Zahl von 1 bis 50, E = H, C₁-C₃₀-Alkyl, C₅-C₁₂-Cycloalkyl oder C₆-C₃₀-Aryl, und n = 2, 3 oder 4 bedeuten, und Y und Z unabhängig voneinander H, C₁-C₃₀-Alkyl oder ―(A-O)ₓ bedeuten, mit Verbindungen, die mindestens eine Acylgruppe enthalten, ist, und mindestens eine aromatische Verbindung der Formel 1, 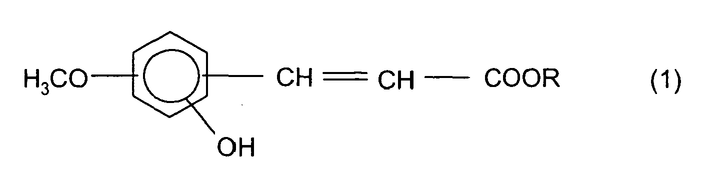 worin R für H oder C₁- bis C₄-Alkyl steht.

12. Brennstofföl nach Anspruch 11, welches eine Mischung aus synthetischen Treibstoffen, einem Mitteldestillat mineralischer Herkunft und/oder einem Biobrennstofföl ist.

13. Brennstofföl nach Anspruch 12, welches eine Mischung aus einem Mitteldestillat mineralischer Herkunft und einem Biobrennstofföl ist, wobei das Mischungsverhältnis der Bestandteile zwischen 99:1 und 1:99 liegt.

14. Verwendung der Additive gemäß einem oder mehreren der Ansprüche 1 bis 10 in Mengen von 5 bis 10.000 ppm als Paraffindispergator in Brennstoffölen.
